# FASCICULE DE BREVET EUROPEEN

(11) **EP 0 446 083 B1**
(45) Date de publication et mention de la délivrance du brevet: **30.11.1994**
(21) Numéro de dépôt: 91400223.3
(22) Date de dépôt: 30.01.1991
(51) Int. Cl.: G01K 7/04

(54) **Procédé et dispositif de mesure de la température de pièces contenues dans une enceinte de traitement thermochimique**
Temperaturmessungsverfahren und -vorrichtung für in einem thermo-chemischen Gefäss enthaltene Stücke
Procedure and apparatus for measuring the temperature of items contained in a thermo-chemical treatment chamber

(30) Priorité: 14.02.1990 FR 9001757
(43) Date de publication de la demande: 11.09.1991
(73) Titulaire: NITRUVID, 95100 Argenteuil (FR)
(72) Inventeur: Lebrun, Jean-Paul, 78380 Bougival (FR); Delmas, Bernard, 92110 Clichy (FR)
(74) Mandataire: Lanceplaine, Jean-Claude

(56) Documents cités:
- GB-A- 1 162 137
- US-A- 4 224 461
- IEEE TRANSACTIONS ON NUCLEAR SCIENCE. vol. 27, no. 1, février 1980, NEW YORK US pages 848 - 851; Cannon et al: "2200 C FUEL CENTRELINE THERMOCOUPLES FOR THELOFT PROGRAM"

## Description

La présente invention a pour objet un procédé et un dispositif de mesure, à l'aide d'au moins un thermocouple et d'appareils de mesure, de la température de pièces contenues dans une enceinte sous atmosphère contrôlée et soumises à un traitement thermochimique, par exemple par plasma.

On connait un procédé de mesure qui consiste à disposer dans une enceinte, lors du chargement des pièces à traiter, au moins un thermocouple préalablement isolé électriquement, ladite enceinte étant reliée à un potentiel anodique alors que les pièces à traiter sont reliées à un potentiel cathodique. Généralement, l'isolation du thermocouple est formée d'une enveloppe constituée d'éléments en un matériau tel que de l'alumine, l'enveloppe du thermocouple étant au contact de la pièce dont on veut mesurer la température. Le thermocouple traverse la paroi de l'enceinte par un passage assurant l'étanchéité de ladite enceinte et la neutralité électrique du thermocouple.

Mais, ce procédé présente de nombreux inconvénients.

En effet, l'enveloppe d'alumine formée par exemple par un assemblage de perles se métallise lors des traitements thermochimiques et devient en surface conductrice de l'électricité ce qui dégrade l'isolation électrique du thermocouple.

Le thermocouple placé dans l'enceinte, sous atmosphère d'un gaz à basse pression, se déplace fréquemment de manière incontrôlée dans son enveloppe d'alumine. Ce déplacement entraine des variations aléatoires sensibles de la valeur de la mesure de la température.

De plus, le thermocouple est continuellement déplacé notamment au moment de l'introduction ou du retrait de l'enceinte des pièces à traiter ou encore sous l'effet des vibrations ou des dilatations dues au chauffage pendant les opérations de traitement.

Par ailleurs, dans le cas de l'utilisation d'un thermocouple de grande longueur, l'enveloppe formée de perles d'alumine assemblées et fréquemment soumise à des vibrations, entraine, par son propre poids, la rupture du thermocouple dans l'enceinte sous atmosphère contrôlée, en cours de traitement. Il s'avère alors impossible de remplacer le thermocouple défaillant sans l'arrêt complet du cycle de traitement et l'ouverture de l'enceinte.

D'autre part, il est impossible de faire passer un thermocouple entre deux pièces adjacentes à traiter sans risquer de perturber le traitement de celles-ci lorsqu'il est suffisamment prêt d'une des pièces ou de rompre par contact la neutralité électrique du dispositif de traitement.

L'expérience sur plusieurs traitements successifs de pièces a mis en évidence que l'accumulation des inconvénients mentionnés ci-dessus ne permet pas de garantir la précision de la mesure de la température, sa reproductibilité et sa fiabilité dans le temps. Par conséquent les exigences de qualité requises par exemple pour un traitement thermochimique par plasma avec le procédé connu sont difficilement remplies.

La présente invention a pour but de remédier à ces inconvénients et de proposer un procédé et un dispositif pour une mesure précise et fiable, à l'aide d'au moins un thermocouple, de la température des pièces contenues dans une enceinte sous atmosphère contrôlée et soumises à un traitement thermochimique par exemple par plasma.

La présente invention a donc pour objet un procédé de mesure, à l'aide d'au moins un thermocouple et d'appareils de mesure, de la température de pièces contenues dans une enceinte sous atmosphère contrôlée et soumises à un traitement thermochimique, par exemple par plasma, ladite enceinte étant reliée à un potentiel anodique et lesdites pièces à traiter étant reliées à un potentiel cathodique, procédé dans lequel on place à proximité ou directement au contact des pièces à traiter ledit thermocouple traversant la paroi de l'enceinte en coulissant et étant isolé électriquement de ladite paroi, caractérisé en ce que :
- on applique au thermocouple le potentiel des pièces à traiter,
- on isole électroniquement ledit thermocouple par rapport à la terre et aux appareils de mesure de la tension du couple thermoélectrique pour effectuer la mesure de la température desdites pièces à traiter.

L'invention concerne également un dispositif de mesure pour la mise en oeuvre du procédé et comprenant au moins un thermocouple et des appareils de mesure de la température de pièces contenues dans une enceinte sous atmosphère contrôlée et soumises à un traitement thermochimique par exemple par plasma, ledit dispositif comprenant une gaine étanche contenant ledit thermocouple et traversant par coulissement la paroi de l'enceinte par l'intermédiaire d'un passage étanche isolant ladite gaine de ladite paroi de l'enceinte, caractétisé en ce qu'il comprend un moyen d'isolation électronique du thermocouple disposé dans la gaine par rapport, d'une part, à la terre et, d'autre part, aux appareils de mesure du couple thermoélectrique et un moyen pour appliquer un même potentiel aux pièces et au thermocouple, ledit moyen d'isolation électronique étant placé entre ledit thermocouple et le reste de la chaîne de mesure.

Selon d'autres caractéristiques de l'invention :
- ledit thermocouple est relié à la gaine de façon étanche,
- la gaine est fermée à une de ses extrémités et forme un puits pour ledit thermocouple, dont l'espace intérieur est en communication avec l'espace extérieur de l'enceinte,
- la gaine est de forme sensiblement cylindrique,
- le moyen d'isolation électronique est formé par une isolation électronique galvanique constituée d'un circuit RLC formant un quadripôle, comprenant d'une part, un circuit LC composé d'une self et d'une capacité montées en série et reliées aux deux bornes d'entrée dudit quadripôle, la borne reliée à la capacité étant en outre à la masse, et d'autre part, une résistance de limitation en courant connectée au point milieu du circuit LC et à une borne de sortie dudit quadripôle, l'autre borne de sortie étant placée également à la masse,
- le moyen d'isolation électronique est formé par un transformateur d'isolement dont le rapport du nombre de spires des enroulements primaire et secondaire est égal à 1.

L'invention sera mieux comprise à l'aide de la description qui va suivre, donnée uniquement à titre d'exemple non limitatif et faite en se référant aux dessins annexés, sur lesquels :
- la Fig. 1 est une vue schématique en coupe dans un plan vertical d'une enceinte d'un bâti à vide pour le traitement thermochimique de pièces et comportant un dispositif de mesure selon l'invention,
- la Fig. 2 est une vue en coupe à plus grande échelle d'un premier mode de réalisation du passage étanche dans la paroi de l'enceinte pour le dispositif de mesure selon l'invention,
- la Fig. 3 est une vue en coupe et à plus grande échelle d'un second mode de réalisation du passage étanche dans la paroi de l'enceinte pour le dispositif de mesure selon l'invention,
- la Fig. 4 est un schéma, selon un premier mode de réalisation, du moyen d'isolation électronique d'un thermocouple du dispositif de mesure,
- la Fig. 5 est un schéma, selon un second mode de réalisation, du moyen d'isolation électronique d'un thermocouple du dispositif de mesure.

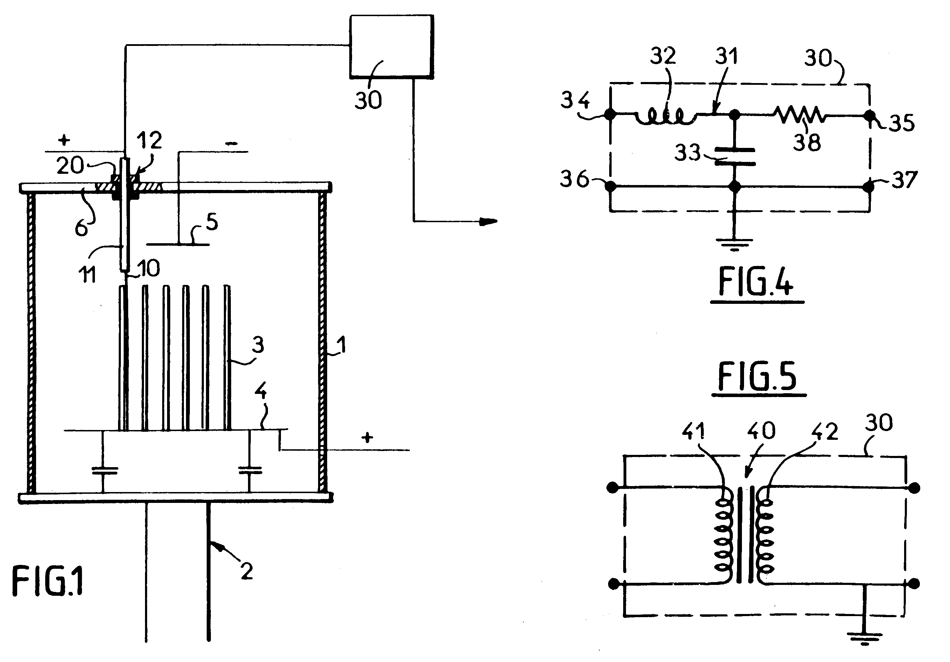

La Fig. 1 représente une enceinte 1 d'un bâti à vide 2 dans laquelle sont disposées des pièces 3 devant subir un traitement thermochimique par exemple par plasma, le plasma étant réalisé sous atmosphère d'un gaz à basse pression.

Les pièces 3 reposent sur une sole 4.

La tension d'ionisation du gaz dans l'enceinte 1 est appliquée entre la sole 4 portant les pièces 3 et une électrode 5 disposée dans ladite enceinte 1 et liée électriquement à la paroi 6 de l'enceinte 1. La sole 4 et les pièces 3 sont placées au potentiel cathodique tandis que la paroi 6 de l'enceinte 1 est au potentiel anodique.

Le dispositif de mesure de la température des pièces 3 à traiter se compose d'au moins un thermocouple 10 disposé dans une gaine 11 traversant en coulissant la paroi 6 de l'enceinte 1 par l'intermédiaire d'un passage isolant 12.

Le thermocouple 10 est donc isolé électriquement de ladite paroi 6 par le passage isolant 12 et se trouve au potentiel des pièces 3 à traiter.

D'autre part, l'isolement du thermocouple 10 par rapport à la terre et aux appareils de mesure, non représentés, de la tension du couple thermoélectrique est assuré par un moyen d'isolation électronique 30 qui sera décrit ultérieurement.

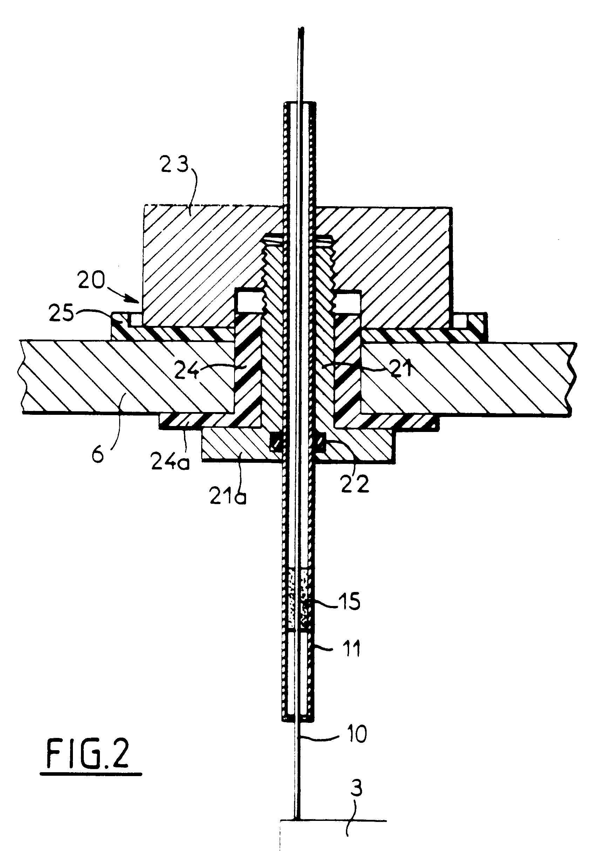

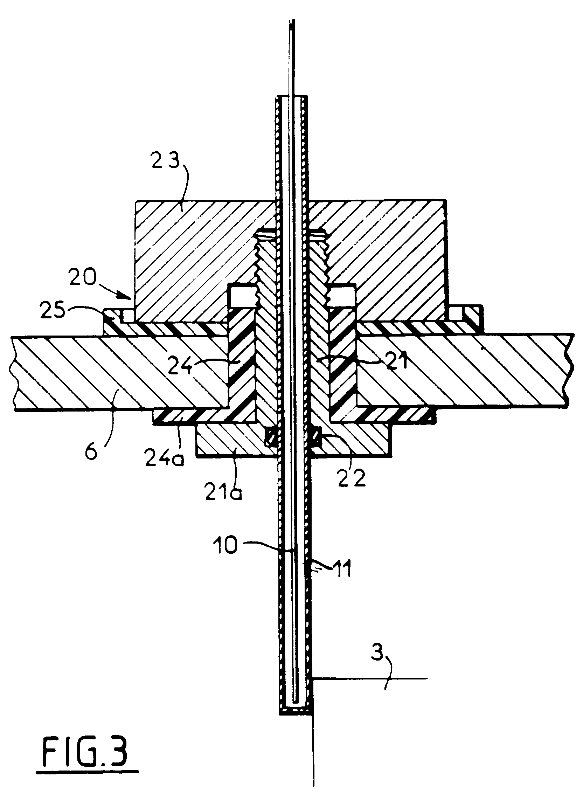

Le passage isolant 12 représenté à plus grande échelle sur les Figs 2 et 3 ménagé dans la paroi 6 de l'enceinte 1 est formé par un organe d'isolation électrique désigné dans son ensemble par la référence 20 séparant la gaine 11 de ladite paroi 6.

Cet organe 20 se compose d'une vis 21 dont la tête 21a est placée à l'intérieur de l'enceinte 1. Cette vis 21 est percée longitudinalement de façon à délimiter un logement par exemple cylindrique pour le passage de la gaine 11. Un joint d'étanchéité 22 est interposé entre le corps de la vis 21 et de gaine 11. La vis 21 est maintenue en position sur la paroi 6 de l'enceinte 1 par un écrou 23 disposé par exemple à l'extérieur de ladite enceinte.

Un manchon cylindrique 24 isolant est monté entre la vis 21 et la paroi 6 et comporte une collerette 24a séparant la tête 21a de la vis 21 de ladite paroi 6 de l'enceinte. Une rondelle 25 isolante est également montée entre l'écrou 23 et la paroi 6 de l'enceinte.

Selon un premier mode de réalisation représenté à la Fig. 2, le thermocouple 10 traverse l'extrémité de la gaine 11 située dans l'enceinte 1 de telle sorte que ledit thermocouple soit directement au contact des pièces 3 à traiter.

L'extrémité de la gaine 11 située à l'exté-rieur de l'enceinte est en communication avec l'extérieur de ladite enceinte et le thermocouple 10 est lié à ladite gaine 11 de façon étanche par exemple par brasage 15.

Cette disposition présente l'avantage de pouvoir ajuster la position du thermocouple 10 par rapport aux pièces 3 et cela grâce au coulissement de la gaine 11 dans le passage étanche 12.

Selon un deuxième mode de réalisation représenté à la Fig. 3, l'extrémité de la gaine 11 située à l'intérieur de l'enceinte 1 est placée directement au contact des pièces 3. Dans ce cas, cette extrémité de la gaine 11 est fermée et ladite gaine forme un puits dans lequel est inséré le thermocouple 10. L'espace intérieur de la gaine 11 est en communication avec l'espace extérieur de l'enceinte 1.

Cette disposition présente l'avantage de pouvoir ajuster la position de la gaine 11 et du thermocouple 10 par rapport aux pièces et de pouvoir retirer ledit thermocouple sans avoir à ouvrir l'enceinte 1.

Un ou plusieurs thermocouples 10 peuvent être insérés dans la gaine 11 en les plaçant de façon à pouvoir mesurer des températures en certains points bien déterminés.

Dans le cas d'un traitement notamment de tubes, la gaine 11 peut avoir une géométrie voisine des tubes à traiter et occuper la place d'une pièce dans le chargement.

Lors du traitement des pièces, le thermocouple 10 et son blindage sont au potentiel de la gaine 11 qui est elle même au potentiel cathodique des pièces 3 dont on veut mesurer la température.

De plus, le thermocouple 10 doit être lui même isolé afin d'éviter les mesures éronées, son blindage ne pouvant pas être relié à la terre sans isolation.

Afin d'éviter tous les parasites et un retour du potentiel cathodique sur les appareils se situant après le thermocouple 10, il est nécessaire d'utiliser un moyen d'isolation électronique 30 entre ledit thermocouple et le reste de la chaine de mesure. Ce moyen d'isolation électronique est indispensable notamment dans le cas de l'utilisation de générateurs à courants pulsés pour l'ionisation du gaz contenu dans l'enceinte 1, et dans le cas d'une alimentation électrique où le neutre est à la terre.

L'isolation du thermocouple 10 par rapport à la terre et aux appareils de mesure de la tension thermoélectrique est assurée, selon un premier mode de réalisation représenté à la Fig. 4, au moyen d'une isolation électronique galvanique constituée d'un circuit RLC formant un quadripôle comprenant, d'une part, un circuit LC 31 composé d'une self 32 et d'une capacité 33 montées en série et réliées aux bornes d'entrée respectivement 34 et 36 du quadripôle, la borne 36 reliée à la capacité 33 étant à la masse, et, d'autre part, une résistance 38 connectée au point milieu du circuit LC 31 et à une borne 35 de sortie du quadripôle, l'autre borne de sortie 37 étant placée à la masse.

Selon un autre mode de réalisation représenté à la Fig. 5, l'isolation du thermocouple 10 est assurée par un transformateur d'isolement 40 dont le rapport n1/n2 du nombre n de spires des enroulements primaire 41 et secondaire 42 est égal à 1, ce qui entraine un rapport des tensions d'entrée et de sortie égale aussi à 1. La tension de sortie du transformateur d'isolement 40 est égale à la tension thermoélectrique formée par le thermocouple 10.

Le procédé et le dispositif selon l'invention sont particulièrement adaptés à la mesure de températures de pièces longilignes tel que des faisceaux de tubes traités par plasma dans une technique de nitruration ionique.

Le fait de laisser l'intérieur d'un tube formant une gaine à la pression atmosphérique tout en maintenant ledit tube au potentiel cathodique permet d'envisager une nitruration ionique, partielle ou totale et de façon séquencée de pièces profilées de dimensions supérieures à celles de l'enceinte, lesdites pièces pouvant être positionnées dans et de part et d'autre de ladite enceinte tout en conservant une mesure fiable et précise des températures et une mesure insensible aux instabilités dues au plasma, par exemple de nitruration ionique.

Par ailleurs, le procédé et le dispositif selon l'invention permettent de pouvoir utiliser des thermocouples standards et d'un prix de revient bas et de pouvoir augmenter la durée de vie des thermocouples sans aucune influence des différentes polarités électriques existantes sur le bâti, tout en supprimant les différentes polarités électriques existantes, dans un four.

## Revendications

1. Procédé de mesure, à l'aide d'au moins un thermocouple (10) et d'appareils de mesure, de la température de pièces (3) contenues dans une enceinte (1) sous atmosphère contrôlée et soumises à un traitement thermochimique par exemple par plasma, ladite enceinte (1) étant reliée à un potentiel anodique et lesdites pièces (3) à traiter étant reliées à un potentiel cathodique, procédé dans lequel on place à proximité ou directement au contact des pièces (3) à traiter le thermocouple (10) traversant la paroi (6) de l'enceinte (1) en coulissant et étant isolé électriquement de ladite paroi (6), caractérisé en ce que :
- on applique au thermocouple (10) le potentiel des pièces (3) à traiter,
- on isole électroniquement ledit thermocouple (10) par rapport à la terre et aux appareils de mesure de la tension du couple thermoélectrique, pour effectuer la mesure de la température desdites pièces (3) à traiter.

2. Dispositif de mesure pour la mise en oeuvre du procédé selon la revendication 1, comprenant au moins un thermocouple (10) et des appareils de mesure de la température de pièces (3) contenues dans une enceinte (1) sous atmosphère contrôlée et soumises à un traitement thermochimique par exemple par plasma, ledit dispositif comprenant une gaine (11) étanche contenant ledit thermocouple (10) et traversant par coulissement une paroi (6) de l'enceinte (1) par l'intermédiaire d'un passage étanche (12) isolant ladite gaine (11) de ladite paroi (6) de l'enceinte (1),
caractérisé en ce qu'il comprend un moyen d'isolation électronique (30) du thermocouple (10) disposé dans la gaine (11) par rapport d'une part, à la terre et, d'autre part, aux appareils de mesure du couple thermoélectrique et un moyen pour appliquer un même potentiel aux pièces (3) et au thermocouple (10), ledit moyen d'isolation électronique (30) étant placé entre ledit thermocouple et le reste de la chaîne de mesure.

3. Dispositif de mesure selon la revendication 2, caractérisé en ce que ledit thermocouple (10) est relié à la gaine (11) de façon étanche.

4. Dispositif de mesure selon la revendication 2, caractérisé en ce que la gaine (11) est fermée à une de ses extrémités et forme un puits pour ledit thermocouple (10), l'espace intérieur dudit puits étant en communication avec l'espace extérieur de l'enceinte (1).

5. Dispositif de mesure selon l'une quelconque des revendications 2 à 4, caractérisé en ce que la gaine (11) est de forme cylindrique.

6. Dispositif de mesure selon la revendication 1, caractérisé en ce que le moyen d'isolation électronique (30) est une isolation électronique galvanique formée d'un circuit RLC constituant un quadripôle, comprenant d'une part, un circuit LC(31) composé d'une self (32) et d'une capacité (33) montées en série et reliées aux bornes d'entrée (34, 36) dudit quadripôle, la borne (36) reliée à la capacité (33) étant à la masse et d'autre part, d'une résistance (38) de limitation en courant connectée au point milieu du circuit (31) et à une borne de sortie (35) dudit quadripôle, l'autre borne de sortie (37) étant placée également à la masse.

7. Dispositif de mesure selon la revendication 1, caractérisé en ce que le moyen d'isolation électronique (30) est formé par un transformateur d'isolement (40) dont le rapport du nombre de spires des enroulements primaires et secondaire est égale à 1.

## Claims

1. Method for measuring, by means of at least one thermocouple (10) and measuring appliances, the temperature of parts (3) contained within a chamber (1) in a controlled atmosphere and subjected to a thermochemical treatment, for example by plasma, the said chamber (1) being connected to an anodic potential and the said parts (3) to be treated being connected to a cathodic potential, a method in which there is placed, in proximity to or directly in contact with the parts (3) to be treated, the thermocouple (10) passing through the wall (6) of the chamber (1), sliding and being electrically isolated from the said wall (6), characterised in that:
- the potential of the parts (3) to be treated is applied to the thermocouple (10),
- the said thermocouple (10) is isolated with respect to earth and to the appliances for measuring the voltage of the thermoelectric couple, in order to carry out the measurement of the temperature of the said parts (3) to be treated.

2. Measuring device for implementing the method according to Claim 1, comprising at least one thermocouple (10) and appliances for measuring the temperature of parts (3) contained within a chamber (1) in a controlled atmosphere and subjected to a thermochemical treatment, for example by plasma, the said device comprising a sealed sheath (11) containing the said thermocouple (10) and passing, by sliding, through a wall (6) of the chamber (1) via a sealed passage (12) isolating the said sheath (11) from the said wall (6) of the chamber (1), characterised in that it comprises electronic means (30) for isolating the thermocouple (10) disposed in the sheath (11) with respect, on the one hand, to earth and, on the other hand, to the appliances for measuring the thermoelectric couple, and a means for applying the same potential to the parts (3) and to the thermocouple (10), the said electronic isolation means (30) being placed between the said thermocouple and the rest of the measuring chain.

3. Measuring device according to Claim 2, characterised in that the said thermocouple (10) is connected to the sheath (11) so as to form a seal.

4. Measuring device according to Claim 2, characterised in that the sheath (11) is closed at one of its ends and forms a well for the said thermocouple (10), the internal space of the said well being in communication with the external space of the chamber (1).

5. Measuring device according to any one of Claims 2 to 4, characterised in that the sheath (11) is cylindrical in shape.

6. Measuring device according to Claim 1, characterised in that the electronic isolation means (30) is a galvanic electronic isolation formed by an RLC circuit constituting a quadripole, comprising, on the one hand, an LC circuit (31) composed of an inductor (32) and a capacitor (33) which are mounted in series and connected to the input terminals (34, 36) of the said quadripole, the terminal (36) connected to the capacitor (33) being earthed, and, on the other hand, of a current limiting resistor (38) connected to the mid-point of the circuit (31) and to an output terminal (35) of the said quadripole, the other output terminal (37) being likewise earthed.

7. Measuring device according to Claim 1, characterised in that the electronic isolating means (30) is formed by an isolating transformer (40), on which the ratio of the number of turns on the primary and secondary windings is equal to 1.

## Patentansprüche

1. Meßverfahren, mittels wenigstens einem Thermoelement (10) und Meßgeräten, für die Temperatur von Teilen (3), die in einem Raum (1) unter kontrollierter Atmosphäre enthalten sind und einer thermochemischen Behandlung, beispielsweise durch Plasma, unterworfen werden, wobei der Raum (1) mit einem anodischen Potential verbunden ist und die zu behandelnden Teile (3) mit einem kathodischen Potential verbunden sind, wobei man bei dem Verfahren das Thermoelement (10), das die Wand (6) des Raumes (1) gleitend durchquert und elektrisch von der Wand (6) isoliert ist, nahe bei oder in direktem Kontakt mit den zu behandelnden Teilen (3) anordnet, dadurch gekennzeichnet, daß:
- man auf das Thermoelement (10) das Potential der zu behandelnden Teile (3) aufgibt,
- man das Thermoelement (10) in bezug auf die Masse und auf die Geräte zum Messen der Spannung der thermoelektrischen Kopplung elektronisch isoliert, um die Messung der Temperatur der zu behandelnden Teile (3) zu bewirken.

2. Meßvorrichtung zum Durchführen des Verfahrens nach Anspruch 1, mit wenigstens einem Thermoelement (10) und Meßgeräten für die Temperatur von Teilen (3), die in einem Raum (1) unter kontrollierter Atmosphäre enthalten sind und einer thermochemischen Behandlung, beispielsweise durch Plasma, ausgesetzt werden, wobei die Vorrichtung eine dichte Hülle (11) aufweist, die das Thermoelement (10) enthält und gleiten eine Wand (6) des Raumes (1) über einen dichten Durchlaß (12) durchquert, der die Hülle (11) von der Wand (6) des Raumes (1) isoliert,
dadurch gekennzeichnet, daß sie eine Einrichtung zum elektronischen Isolieren (30) des Thermoelementes (10) aufweist, die in der Hülle (11) in bezug auf, einerseits, die Masse, und, andererseits, die Meßgeräte der thermoelektrischen Kopplung angeordnet ist, und eine Einrichtung zum Aufgeben des gleichen Potentials auf die Teile (3) und auf das Thermoelement (10), wobei die Einrichtung zum elektronischen Isolieren (30) zwischen dem Thermoelement und dem Rest der Meßkette angeordnet ist.

3. Meßvorrichtung nach Anspruch 2, dadurch gekennzeichnet, daß das Thermoelement (10) dicht mit der Hülle (11) verbunden ist.

4. Meßvorrichtung nach Anspruch 2, dadurch gekennzeichnet, daß die Hülle (11) an einem ihrer Enden abgeschlossen ist und einen Schacht für das Thermoelement (10) bildet, wobei der Innenraum des Schachtes in Kommunikation mit dem Außenbereich des Raumes (1) ist.

5. Meßvorrichtung nach einem der Ansprüche 2 bis 4, dadurch gekennzeichnet, daß die Hülle (11) von zylindrischer Form ist.

6. Meßvorrichtung nach Anspruch 1, dadurch gekennzeichnet, daß die Einrichtung zum elektronischen Isolieren (30) einem galvanische elektronische Isolation ist, die aus einer RLC-Schaltung gebildet ist, welche einen Quadrupol bildet, welcher einerseits eine LC-Schaltung (31), die aus einer Drossel (32) und einem Kondensator (33) besteht, welche in Reihe geschaltet und mit Eingangsanschlüssen (34, 36) des Quadrupols verbunden sind, wobei der Anschluß (36), der mit dem Kondensator (33) verbunden ist, auf Masse liegt, und andererseits aus einem Begrenzungswiderstand (38) für den Strom, der mit dem Mittepunkt der Schaltung (31) und mit einem Ausgangsanschluß (35) des Quadrupols verbunden ist, besteht, wobei der andere Ausgangsanschluß (37) gleichermaßen auf Masse gelegt ist.

7. Meßvorrichtung nach Anspruch 1, dadurch gekennzeichnet, daß die Einrichtung zum elektronischen Isolieren (30) aus einem Isoliertransformator (40) gebildet ist, wobei dessen Verhältnis der Windungszahlen der Primär- und Sekundärwicklungen gleich 1 ist.
